# EUROPÄISCHE PATENTSCHRIFT

(11) **EP 3 816 522 B1**
(45) Veröffentlichungstag und Bekanntmachung des Hinweises auf die Patenterteilung: **28.02.2024**
(21) Anmeldenummer: 20201221.7
(22) Anmeldetag: 12.10.2020
(51) Int. Cl.: F24D 11/02, F24D 19/10

(54) **VERFAHREN ZUR STEUERUNG EINER WÄRMEVORRICHTUNG**
METHOD FOR CONTROLLING A HEATING DEVICE
PROCÉDÉ DE COMMANDE D'UN DISPOSITIF DE CHAUFFAGE

(30) Priorität: 31.10.2019 DE 102019216857
(43) Veröffentlichungstag der Anmeldung: 05.05.2021
(73) Patentinhaber: Robert Bosch GmbH, 70442 Stuttgart (DE)
(72) Erfinder: von Horstig, Johanna, 35390 Giessen (DE); Hufnagel, Philipp, 73249 Wernau (DE); Becker, Dennis, 35329 Gemuenden/Felda (DE); Geschwend, Thomas, 35578 Wetzlar (DE); Glueck, Christian, 35510 Butzbach (DE)

(56) Entgegenhaltungen:
- EP-A1- 3 115 711
- EP-A1- 3 147 583
- EP-A1- 3 159 613
- EP-B1- 3 115 711
- EP-B1- 3 147 583
- WO-A1-2016/012029
- CN-A- 105 135 616
- DE-A1- 3 702 080
- DE-A1-102009 017 423
- DE-B4-102009 017 423

## Beschreibung

### Stand der Technik

Es ist bereits ein Verfahren zur Steuerung einer Wärmevorrichtung vorgeschlagen worden, welche zumindest einen Wärmekreislauf mit zumindest einer Wärmepumpe und einen Wärmespeicher, welcher mit dem Wärmekreislauf koppelbar ist, umfasst. Solche Verfahren zur Steuerung einer Wärmevorrichtung und Wärmevorrichtung sind aus den Dokumenten DE102009017423A1 und EP3147583A1 bekannt.

### Offenbarung der Erfindung

Die Erfindung geht aus von einem Verfahren zur Steuerung einer Wärmevorrichtung, welche zumindest einen Wärmekreislauf mit zumindest einer Wärmepumpe und einen Wärmespeicher, welcher mit dem Wärmekreislauf koppelbar ist, umfasst.

Es wird vorgeschlagen, dass der Wärmespeicher abhängig von einer Temperaturänderung des Wärmekreislaufs in den Wärmekreislauf ein- und/oder ausgekoppelt wird, um die Temperaturänderung zu verlangsamen. Vorzugsweise ist die Wärmevorrichtung als Heizvorrichtung und/oder als Kühlvorrichtung ausgebildet. Insbesondere ist der Wärmekreislauf als Heizkreislauf und/oder als Kühlkreislauf ausgebildet. Insbesondere tauscht die Wärmepumpe in zumindest einem Verfahrensschritt Wärme zwischen dem Wärmekreislauf und einem Wärmereservoir, insbesondere einer Umgebung der Wärmepumpe, wie beispielsweise der Atmosphäre, einem Gewässer und/oder dem Erdreich, aus. Erfindungsgemäß umfasst der Wärmekreislauf zumindest einen Verbraucheranschluss für zumindest einen Wärmeübertrager, beispielsweise für einen Heizkörper, für einen Kühlkörper, für eine Fußbodenheizung oder dergleichen. Insbesondere ist der Wärmekreislauf dazu vorgesehen, Wärme zwischen der Wärmepumpe und dem Verbraucheranschluss auszutauschen. Insbesondere wälzt in zumindest einem Verfahrensschritt zumindest eine Fluidumwälzeinheit, beispielsweise eine Pumpe, ein Gebläse und/oder ein Kompressor, einen Wärmeträger, insbesondere Wasser, eine wässrige Lösung, ein Thermalöl, Luft oder dergleichen, in dem Wärmekreislauf um. Unter "vorgesehen" soll insbesondere speziell eingerichtet, speziell programmiert, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Insbesondere umfasst der Wärmespeicher ein Speichervolumen, das in zumindest einem Betriebszustand mit einem weiteren Wärmeträger oder dem Wärmeträger, insbesondere zumindest teilweise, gefüllt ist. Beispielsweise ist der Wärmespeicher als Warmwasserspeicher, insbesondere als Trinkwasserspeicher, ausgebildet. Insbesondere umfasst der Wärmekreislauf einen Wärmeübertrager zu einem Austausch von Wärme mit dem Speichervolumen des Wärmespeichers, insbesondere des Warmwasserspeichers. Alternativ ist der Wärmespeicher als Pufferspeicher ausgebildet, dessen Speichervolumen fluidtechnisch, insbesondere direkt, mit dem Wärmekreislauf verbunden ist, insbesondere ohne zwischengeschalteten Wärmeübertrager. Erfindungsgemäß ist der Wärmespeicher in einem fluidtechnischen Speicherzweig der Wärmevorrichtung angeordnet. Erfindungsgemäß ist der Wärmespeicher, insbesondere der Speicherzweig, fluidtechnisch parallel zu dem Verbraucheranschluss ein- und/oder auskoppelbar. Alternativ ist der Speicherzweig fluidtechnisch in Reihe mit dem Verbraucheranschluss ein und/oder auskoppelbar.

Erfindungsgemäß umfasst die Wärmevorrichtung zumindest eine Koppeleinheit. Insbesondere koppelt die Koppeleinheit den Wärmespeicher, der Speicherzweig, in zumindest einem Verfahrensschritt in den Wärmekreislauf ein.

Erfindungsgemäß koppelt die Koppeleinheit den Wärmespeicher, den Speicherzweig, in zumindest einem Verfahrensschritt aus dem Wärmekreislauf aus. Insbesondere bringt die Koppeleinheit bei einem Auskoppeln eine Durchflussrate des Wärmeträgers durch den Wärmespeicher zum Erliegen, wobei insbesondere der Wärmeträger in dem Speicherzweig mit dem Wärmekreislauf fluidtechnisch verbunden bleibt oder von diesem fluidtechnisch getrennt wird. Beispielsweise umfasst die Koppeleinheit zumindest eine Fluidfördereinheit, wie eine Pumpe, ein Gebläse und/oder einen Kompressor oder dergleichen zu einem Einkoppeln und/oder einem Auskoppeln des Wärmespeichers in den/von dem Wärmekreislauf. Alternativ oder zusätzlich umfasst die Koppeleinheit eine Fluidkontrolleinheit, wie ein Mehrwegeventil, ein Stellventil, eine Drosselklappe oder dergleichen zu einem Einkoppeln und/oder einem Auskoppeln des Wärmespeichers in den/von dem Wärmekreislauf.

Erfindungsgemäß wird die Koppeleinheit von einer Steuereinheit der Wärmevorrichtung gesteuert. Vorzugsweise verarbeitet die Steuereinheit zumindest einen Temperaturmesswert. Vorzugsweise erzeugt die Steuereinheit ein Steuersignal für die Koppeleinheit in Abhängigkeit von dem Temperaturmesswert. Vorzugsweise fragt die Steuereinheit den Temperaturmesswert von zumindest einem Sensorelement, welches insbesondere in dem Wärmekreislauf angeordnet ist, und/oder von der Wärmepumpe ab. Vorzugsweise überwacht die Steuereinheit eine Temperatur des Wärmekreislaufs. Insbesondere fragt die Steuereinheit Temperaturmesswerte in regelmäßigen oder unregelmäßigen zeitlichen Abständen ab. Optional interpoliert die Steuereinheit aus den Temperaturmesswerten einen kontinuierlichen Temperaturverlauf. Vorzugsweise verarbeitet die Steuereinheit die Temperaturmesswerte, insbesondere zumindest zwei Temperaturmesswerte, zu einer Erfassung der Temperaturänderung. Beispielsweise erstellt die Steuereinheit aus den Temperaturmesswerten einen Differenzenquotient. Beispielsweise ermittelt die Steuereinheit eine Ableitung des Temperaturverlaufs. Beispielsweise ermittelt die Steuereinheit eine Temperaturdifferenz aus zwei aufeinander folgenden Temperaturmesswerten, welche insbesondere nach einer festgelegten Zeit abgefragt werden. Beispielsweise ermittelt die Steuereinheit ausgehend von einer Starttemperatur eine Zeitdauer, bis eine festgelegte Temperaturdifferenz erreicht ist.

Vorzugsweise führt die Steuereinheit zumindest eine Gegenmaßnahme aus, wenn sie eine kritische Temperaturänderung erfasst, insbesondere um die Temperaturänderung zumindest zu verlangsamen und/oder aufzuhalten. Vorzugsweise bewertet die Steuereinheit eine Temperaturänderung als kritisch, wenn sie betragsmäßig einen vorgegebenen Schwellenwert überschreitet.

Es ist denkbar, dass, beispielsweise abhängig vom Vorzeichen der Temperaturänderung, die Steuereinheit unterschiedliche Gegenmaßnahmen durchführt. Es ist grundsätzlich denkbar, dass die Gegenmaßnahme zusätzlich von einem Betrag des aktuellen Temperaturmesswerts und/oder von einem Temperaturbereich, in welchem sich der aktuelle Temperaturmesswert befindet, abhängig ist. Insbesondere vergleicht die Steuereinheit den Temperaturmesswert zumindest mit einer maximal zulässigen Betriebstemperatur und/oder einer minimal zulässigen Betriebstemperatur. Insbesondere ist die Steuereinheit dazu vorgesehen, den Temperaturmesswert, insbesondere möglichst lange, innerhalb einer zulässigen Temperaturspanne zwischen der maximal zulässigen Betriebstemperatur und der minimal zulässigen Betriebstemperatur zu halten. Vorzugsweise ist die Gegenmaßnahme bei einem Temperaturmesswert innerhalb der zulässigen Temperaturspanne unabhängig von dem konkreten Betrag des Temperaturmesswerts. Insbesondere ist das Einkoppeln des Wärmespeichers eine Gegenmaßnahme, die von der Steuereinheit veranlasst wird, um die Temperaturänderung zu verlangsamen. Insbesondere ist das Auskoppeln des Wärmespeichers eine Gegenmaßnahme, die von der Steuereinheit veranlasst wird, um die Temperaturänderung zu verlangsamen. Beispielsweise kann eine zusätzliche Gegenmaßnahme das Ein- und/oder Auskoppeln weiterer Wärmeerzeuger, insbesondere das Schalten eines elektrischen Heizelements, das Ein- und/oder Auskoppeln weiterer Wärmekapazitäten, das Ein- und/oder Auskoppeln weiterer Verbraucheranschlüsse oder dergleichen umfassen.

Durch die erfindungsgemäße Ausgestaltung des Verfahrens kann eine Betriebstemperatur der Wärmepumpe vorteilhaft lange in der zulässigen Temperaturspanne gehalten werden. Insbesondere kann die Wärmepumpe vorteilhaft lange unterbrechungsfrei betrieben werden. Insbesondere kann ein Übergang zu einem Taktbetrieb der Wärmepumpe vorteilhaft lange vermieden werden. Insbesondere kann ein Verschleiß der Wärmepumpe vorteilhaft gering gehalten werden. Insbesondere kann die Wärmepumpe mit vorteilhaft geringen Einschränkungen eines Benutzerkomforts mittels des Wärmespeichers enteist werden.

Weiter wird vorgeschlagen, dass in zumindest einem Verfahrensschritt zu einem Einkoppeln und/oder einem Auskoppeln des Wärmespeichers eine Speicherfördereinheit der Wärmevorrichtung angesteuert wird. Vorzugsweise umfasst die Koppeleinheit zumindest die Speicherfördereinheit. Vorzugsweise ist die Speicherfördereinheit eine Fluidfördereinheit, beispielsweise eine Pumpe, ein Gebläse und/oder ein Kompressor, welche in dem Speicherzweig angeordnet ist. Insbesondere fördert die Speicherfördereinheit in zumindest einem Verfahrensschritt den Wärmeträger durch den Speicherzweig, insbesondere durch den Wärmespeicher, hindurch. Insbesondere nimmt die Speicherfördereinheit zu dem Einkoppeln des Wärmespeichers einen Betrieb auf. Insbesondere stellt die Speicherfördereinheit zu dem Auskoppeln des Wärmespeichers den Betrieb ein. Durch die erfindungsgemäße Ausgestaltung kann eine Zirkulationsrate des Wärmeträgers in dem Wärmekreislauf vorteilhaft unabhängig von einem Koppelzustand des Wärmespeichers gehalten werden.

Ferner wird vorgeschlagen, dass in zumindest einem Verfahrensschritt vor einem Einkoppeln des Wärmespeichers ein Temperaturabgleich durchgeführt wird. Vorzugsweise fragt die Steuereinheit in zumindest einem Verfahrensschritt eine Speichertemperatur von dem Wärmespeicher und/oder einem Sensorelement in dem Speichervolumen des Wärmespeichers ab. Vorzugsweise vergleicht die Steuereinheit die Speichertemperatur mit dem aktuellen Temperaturmesswert. Vorzugsweise überprüft die Speichereinheit bei fallenden Temperaturmesswerten, ob der Wärmespeicher auf den Wärmeträger übertragbare Wärmeenergie zur Verfügung stellen kann. Insbesondere veranlasst die Steuereinheit das Einkoppeln des Wärmespeichers, wenn die Temperaturänderung negativ ist und die Speichertemperatur höher als der aktuelle Temperaturmesswert ist. Vorzugsweise überprüft die Speichereinheit bei steigenden Temperaturmesswerten, ob der Wärmespeicher Wärmeenergie von dem Wärmeträger aufnehmen kann. Insbesondere veranlasst die Steuereinheit das Einkoppeln des Wärmespeichers, wenn die Temperaturänderung positiv ist und die Speichertemperatur kleiner als der aktuelle Temperaturmesswert ist. Durch die erfindungsgemäße Ausgestaltung kann die Zweckmäßigkeit einer Gegenmaßnahme vorteilhaft frühzeitig bestimmt werden.

Des Weiteren wird vorgeschlagen, dass in zumindest einem Verfahrensschritt eine zusätzliche Wärmekapazität zumindest eines weiteren Erzeugers, insbesondere eines Heizkessels, der Wärmevorrichtung genutzt wird, um eine Temperaturänderung des Wärmekreislaufs zu verlangsamen. Beispielsweise ist die Wärmevorrichtung als bivalente Heizungsanlage ausgebildet, welche insbesondere die Wärmepumpe und den weiteren Erzeuger, insbesondere den Heizkessel, umfasst. Insbesondere ist der weitere Erzeuger zu einer Erzeugung von Wärme und/oder zu einer Abgabe von Wärme an ein Wärmereservoir vorgesehen. Vorzugsweise ist der weitere Erzeuger fluidtechnisch in Reihe mit dem Verbraucheranschluss und/oder mit dem Wärmespeicher angeordnet und/oder ein- und auskoppelbar. Vorzugsweise weist der weitere Erzeuger ein Fluidaufnahmevolumen auf, welches in zumindest einem Verfahrensschritt von dem Wärmeträger durchströmt wird. Insbesondere ist das Fluidaufnahmevolumen größer als ein Volumen einer gedachten direkten Fluidleitung von einem Rücklauf zu einem Vorlauf des weiteren Erzeugers. Beispielsweise ist das Fluidaufnahmevolumen mittels eines Kessels, eines Tanks, einer Aufweitung eines Leitungsquerschnitts, einer mäanderförmigen Leitungsführung oder dergleichen realisiert. Vorzugsweise fördert zumindest eine Fluidfördereinheit der Wärmevorrichtung, insbesondere die Fluidumwälzeinheit, in zumindest einem Verfahrensschritt den Wärmeträger durch den weiteren Erzeuger, insbesondere zu einer Verlangsamung der Temperaturänderung. Insbesondere nutzt die Steuereinheit den weiteren Erzeuger, insbesondere das Fluidaufnahmevolumen, in zumindest einem Verfahrensschritt als zusätzlichen Wärmespeicher, insbesondere zu einer Aufnahme oder Abgabe von Wärme. Vorzugsweise nutzt die Steuereinheit das Fluidaufnahmevolumen als Wärmespeicher, unabhängig von einem Betriebszustand des weiteren Erzeugers. Durch die erfindungsgemäße Ausgestaltung kann ein vorteilhaft hoher Anteil einer Wärmekapazität der Wärmevorrichtung genutzt werden. Insbesondere kann eine vorteilhaft große gespeicherte Wärmemenge bei fallenden Temperaturmesswerten an den Wärmeträger abgegeben werden. Insbesondere kann eine vorteilhaft große Wärmemenge bei steigenden Temperaturmesswerten von dem Wärmeträger aufgenommen werden. Insbesondere kann eine Temperatur des Wärmekreislaufs vorteilhaft lange in der zulässigen Temperaturspanne gehalten werden.

Weiterhin wird vorgeschlagen, dass in zumindest einem Verfahrensschritt eine zusätzliche Wärmekapazität zumindest eines an der Wärmevorrichtung angeschlossenen Verbrauchers genutzt wird, um eine Temperaturänderung des Wärmekreislaufs zu verlangsamen. Vorzugsweise fragt die Steuereinheit in zumindest einem Verfahrensschritt eine Verbrauchertemperatur von einem an dem Verbraucheranschluss angeordneten Sensorelement und/oder von einem an dem Verbraucheranschluss angeschlossenen externen Verbraucher ab. Vorzugsweise führt die Steuereinheit in zumindest einem Verfahrensschritt einen Verbrauchertemperaturabgleich des Temperaturmesswerts mit der Verbrauchertemperatur durch. Vorzugsweise koppelt die Steuereinheit den Verbraucheranschluss in zumindest einem Verfahrensschritt in den Wärmekreislauf abhängig von dem Verbrauchertemperaturabgleich ein. Vorzugsweise steuert die Steuereinheit eine Verbraucherfördereinheit, insbesondere eine Pumpe, ein Gebläse und/oder einen Kompressor, an, um den Verbraucheranschluss in den Wärmekreislauf einzukoppeln. Vorzugsweise überprüft die Steuereinheit, ob der Verbraucher Wärme von dem Wärmeträger aufnehmen kann und/oder Wärme auf den Wärmeträger übertragen kann. Insbesondere veranlasst die Steuereinheit ein Einkoppeln des Verbrauchers bei steigenden Temperaturmesswerten und wenn die Verbrauchertemperatur kleiner ist als der aktuelle Temperaturmesswert. Durch die erfindungsgemäße Ausgestaltung kann eine Temperatur des Wärmekreislaufs vorteilhaft lange in der zulässigen Temperaturspanne gehalten werden.

Darüber hinaus wird vorgeschlagen, dass in zumindest einem Verfahrensschritt der Wärmespeicher und eine zusätzliche Wärmekapazität abwechselnd verwendet werden, um eine Temperaturänderung des Wärmekreislaufs zu verlangsamen. Vorzugsweise koppelt die Steuereinheit den Verbraucheranschluss und den Wärmespeicher in zumindest einem Verfahrensschritt abwechselnd ein. Vorzugsweise nimmt die Steuereinheit in zumindest einem Verfahrensschritt bei Erfassung der Temperaturänderung die Speicherfördereinheit in Betrieb und stellt insbesondere gleichzeitig den Betrieb der Verbraucherfördereinheit ein und/oder drosselt diesen. Vorzugsweise nimmt die Steuereinheit in zumindest einem Verfahrensschritt bei Erfassung einer weiteren Temperaturänderung die Speicherfördereinheit außer Betrieb und nimmt insbesondere gleichzeitig die Verbraucherfördereinheit in Betrieb und/oder erhöht eine Modulationsrate der Verbraucherfördereinheit. Durch die erfindungsgemäße Ausgestaltung kann eine Heizleistung und/oder eine Kühlleistung der Wärmepumpe vorteilhaft umfänglich genutzt werden. Insbesondere kann eine Gesamtwärmekapazität der Wärmevorrichtung vorteilhaft umfänglich genutzt werden, um die Kühlleistung und/oder Heizleistung der Wärmepumpe zwischenzuspeichern.

Weiter wird vorgeschlagen, dass in zumindest einem Verfahrensschritt der Wärmespeicher und eine zusätzliche Wärmekapazität der Wärmevorrichtung zur gleichen Zeit verwendet werden, um eine Temperaturänderung des Wärmekreislaufs zu verlangsamen. Insbesondere wird der weitere Erzeuger als zusätzliche Wärmekapazität zur gleichen Zeit mit dem Wärmespeicher verwendet. Vorzugsweise ist der weitere Erzeuger, insbesondere das Fluidaufnahmevolumen des weiteren Erzeugers, insbesondere dauerhaft, in den Wärmekreislauf eingebunden. Vorzugsweise wird der Wärmespeicher in zumindest einem Verfahrensschritt fluidtechnisch in Reihe mit dem weiteren Erzeuger in den Wärmekreislauf eingekoppelt. Alternativ wird der Wärmespeicher in zumindest einem Verfahrensschritt fluidtechnisch parallel zu dem weiteren Erzeuger in den Wärmekreislauf eingekoppelt. Durch die erfindungsgemäße Ausgestaltung kann eine Heizleistung und/oder eine Kühlleistung der Wärmepumpe vorteilhaft umfänglich genutzt werden. Insbesondere kann eine Gesamtwärmekapazität der Wärmevorrichtung vorteilhaft umfänglich genutzt werden, um die Kühlleistung und/oder Heizleistung der Wärmepumpe zwischenzuspeichern.

Ferner wird vorgeschlagen, dass in zumindest einem Verfahrensschritt während einer Enteisung der Wärmepumpe eine Fördermenge eines Wärmeträgers durch die Wärmepumpe moduliert wird. Vorzugsweise ist die Wärmepumpe bidirektional betreibbar. Insbesondere umfasst die Wärmepumpe zumindest einen Heizmodus zu einer Wärmeübertragung von dem Wärmereservoir zu dem Wärmekreislauf. Insbesondere umfasst die Wärmepumpe zumindest einen Kühlmodus zu einer Wärmeübertragung von dem Wärmekreislauf zu dem Wärmereservoir. Vorzugsweise wird die Wärmepumpe zu der Enteisung in dem Kühlmodus betrieben. Insbesondere nimmt die Wärmepumpe zu der Enteisung Wärme aus dem Wärmekreislauf auf. Insbesondere stellen/stellt die Steuereinheit und/oder eine wärmepumpeninterne Steuereinheit einen wärmepumpeninternen Wärmekreislauf der Wärmepumpe so ein, dass Wärme von dem Wärmekreislauf zu einem zu enteisenden Bereich der Wärmepumpe übertragen wird. Insbesondere sind der Wärmekreislauf und der wärmepumpeninterne Wärmekreislauf fluidtechnisch getrennt ausgebildet. Insbesondere wird Wärme zwischen dem Wärmekreislauf und dem wärmepumpeninternen Wärmekreislauf mittels eines Wärmeübertragers der Wärmepumpe, insbesondere eines Verdampfers und/oder eines Kondensators, ausgetauscht. Vorzugsweise veranlasst die Steuereinheit ein Einkoppeln des Wärmespeichers in den Wärmekreislauf, wenn die Temperaturmesswerte des Wärmekreislaufs sinken und die Steuereinheit diese Temperaturänderung als kritisch bewertet. Vorzugsweise stellt die Steuereinheit die Speicherfördereinheit auf eine Maximalförderleistung der Speicherfördereinheit. Vorzugsweise stellt die Steuereinheit während der Enteisung die Fluidumwälzeinheit zu einer Förderung des Wärmeträgers durch den Wärmeübertrager auf zumindest 40 %, vorzugsweise auf zumindest 50 %, bevorzugt auf zumindest 70 % einer Maximalförderleistung der Fluidumwälzeinheit. Es ist denkbar, dass die Wärmepumpe die Enteisung selbstständig ausführt oder dass die Steuereinheit die Enteisung koordiniert. Vorzugsweise erkennt die Steuereinheit die Enteisung bei einer selbständigen Enteisung der Wärmepumpe aufgrund eines Abfalls der Temperaturmesswerte. Durch die erfindungsgemäße Ausgestaltung kann der Wärmespeicher und/oder der weitere Erzeuger vorteilhaft zu einer Enteisung der Wärmepumpe genutzt werden. Insbesondere kann ein Risiko eines Einfrierens des Wärmekreislaufs vorteilhaft gering gehalten werden. Insbesondere kann der Wärmespeicher und/oder der weitere Erzeuger vorteilhaft genutzt werden, bevor einer Nutzung der Wärme in dem Verbraucher in Anspruch genommen werden muss. Insbesondere kann eine Einschränkung eines Benutzerkomforts vorteilhaft gering gehalten werden.

Des Weiteren wird vorgeschlagen, dass in zumindest einem Verfahrensschritt während eines Heizmodus der Wärmepumpe die Wärmepumpe abgestellt wird, wenn eine Temperatur des Wärmespeichers höher ist als eine Temperatur des Wärmekreislaufs. Insbesondere wenn eine Überprüfung, ob der Wärmespeicher Wärme aus dem Wärmekreislauf aufnehmen kann, ein negatives Resultat liefert und/oder die maximal zulässige Betriebstemperatur als Temperaturmesswert erfasst wird, erzeugt die Steuereinheit ein Steuersignal zu einer Abschaltung der Wärmepumpe. Durch die erfindungsgemäße Ausgestaltung kann die Wärmepumpe vorteilhaft lange betrieben werden.

Darüber hinaus wird eine Wärmevorrichtung, insbesondere Heizungsanlage, mit einer Steuereinheit zu einer Durchführung eines erfindungsgemäßen Verfahrens vorgeschlagen. Vorzugsweise umfasst die Wärmevorrichtung die Wärmepumpe. Alternativ oder zusätzlich umfasst die Wärmevorrichtung zumindest einen Wärmepumpenanschluss zu einem Anschluss einer externen Wärmepumpe. Vorzugsweise umfasst die Wärmevorrichtung den Wärmespeicher. Alternativ oder zusätzlich umfasst die Wärmevorrichtung zumindest einen Speicheranschluss zu einem Anschluss eines externen Wärmespeichers. Vorzugsweise umfasst die Wärmevorrichtung den Wärmekreislauf. Vorzugsweise wird der Wärmekreislauf zumindest im Wesentlichen von Leitungselementen wie Rohren, Schläuchen, Schächten oder dergleichen gebildet. Vorzugsweise umfasst die Wärmevorrichtung zumindest eine Fluidfördereinheit, insbesondere die Fluidumwälzeinheit, die Speicherfördereinheit und/oder die Verbraucherfördereinheit, zu einer Umwälzung des Wärmeträgers in dem Wärmekreislauf und/oder zu einer Förderung des Wärmeträgers durch in den Wärmekreislauf eingekoppelte Einheiten. Unter einer Steuereinheit soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Vorzugsweise ist die Steuereinheit zu einer Steuerung der Fluidfördereinheit, insbesondere zu einer Koordinierung mehrerer Fluidfördereinheiten, vorgesehen. Besonders bevorzugt ist die Steuereinheit zusätzlich zu einer Steuerung der Wärmepumpe und/oder des weiteren Erzeugers ausgebildet. Alternativ oder zusätzlich umfassen/umfasst die Wärmepumpe und/oder der weitere Erzeuger eine eigenständige Steuereinheit zu einer Steuerung oder Regelung eines Betriebs der Wärmepumpe beziehungsweise des weiteren Erzeugers. Es ist grundsätzlich denkbar, dass die Steuereinheit als Hardwaremodul und/oder als Softwaremodul in einem umfassenderen Steuersystem, beispielsweise einer Zentralheizungssteuerung, einem Gebäudemanagementsystem oder dergleichen, realisiert ist. Vorzugsweise umfasst die Wärmevorrichtung zumindest eine Sensoreinheit zur Erfassung des Temperaturmesswerts, welche zumindest ein als Temperatursensor ausgebildetes Sensorelement in dem Wärmekreislauf umfasst. Vorzugsweise umfasst die Sensoreinheit ein als zusätzlicher Temperatursensor ausgebildetes zusätzliches Sensorelement in und/oder an dem Wärmespeicher, insbesondere zu einer Erfassung der Speichertemperatur des Wärmespeichers. Vorzugsweise umfasst die Sensoreinheit zumindest ein als weiterer Temperatursensor ausgebildetes weiteres Sensorelement an dem Verbraucheranschluss und/oder zu einer Anordnung an und/oder in dem Verbraucher, insbesondere zu einer Messung einer Verbrauchertemperatur.

Durch die erfindungsgemäße Ausgestaltung kann eine Betriebstemperatur der Wärmepumpe vorteilhaft lange in der zulässigen Temperaturspanne gehalten werden. Insbesondere kann die Wärmepumpe vorteilhaft lange unterbrechungsfrei betrieben werden. Insbesondere kann ein Übergang zu einem Taktbetrieb der Wärmepumpe vorteilhaft lange vermieden werden. Insbesondere kann ein Verschleiß der Wärmepumpe vorteilhaft gering gehalten werden. Insbesondere kann die Wärmepumpe mit vorteilhaft geringen Einschränkungen eines Benutzerkomforts mittels des Wärmespeichers enteist werden.

Das erfindungsgemäße Verfahren und/oder die erfindungsgemäße Wärmevorrichtung sollen/soll hierbei nicht auf die oben beschriebene Anwendung und Ausführungsform beschränkt sein. Insbesondere kann das erfindungsgemäße Verfahren und/oder die erfindungsgemäße Wärmevorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine schematische Darstellung einer erfindungsgemäßen Wärmevorrichtung,
- Fig. 2: eine schematische Darstellung eines erfindungsgemäßen Verfahrens,
- Fig. 3: eine schematische Darstellung eines Temperaturverlaufs während einer Enteisung einer Wärmepumpe der Wärmevorrichtung und
- Fig. 4: eine schematische Darstellung eines Temperaturverlaufs während eines verringerten Wärmebedarfs eines an der Wärmevorrichtung angeschlossenen Verbrauchers.

### Beschreibung des Ausführungsbeispiels

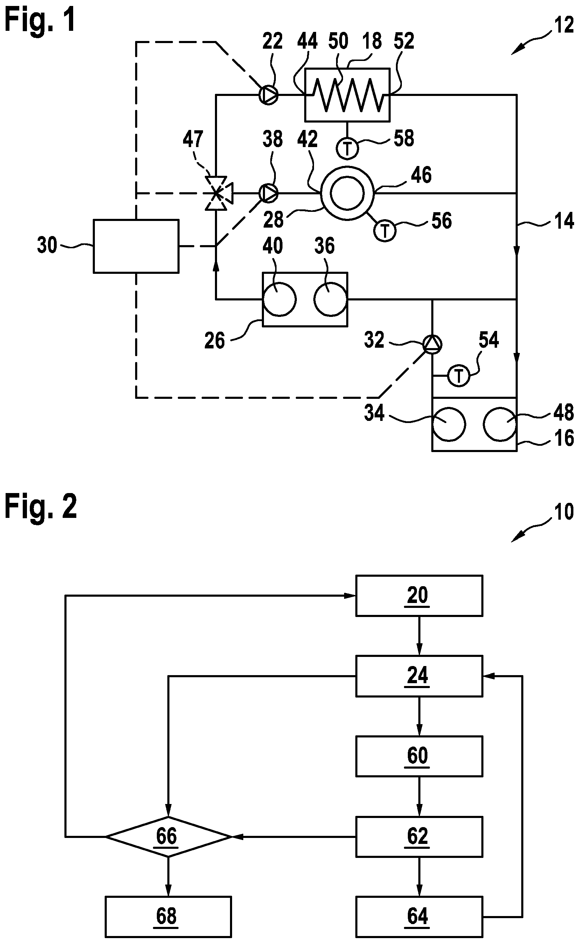

Figur 1 zeigt eine Wärmevorrichtung 12. Insbesondere ist die Wärmevorrichtung 12 als Heizungsanlage, insbesondere als bivalente Heizungsanlage, ausgebildet. Vorzugsweise umfasst die Wärmevorrichtung 12 zumindest eine Wärmepumpe 16. Vorzugsweise umfasst die Wärmevorrichtung 12 zumindest einen weiteren Erzeuger 26, insbesondere einen Heizkessel. Die Wärmevorrichtung 12 umfasst zumindest einen Wärmekreislauf 14. Die Wärmepumpe 16 ist an dem Wärmekreislauf 14 fluidtechnisch angeschlossen. Insbesondere ist der weitere Erzeuger 26 an dem Wärmekreislauf 14 fluidtechnisch angeschlossen. Vorzugsweise umfasst der Wärmekreislauf 14 zumindest einen Verbraucheranschluss, an welchen ein Verbraucher 28 anschließbar ist. Vorzugsweise umfasst die Wärmevorrichtung 12 zumindest eine Fluidumwälzeinheit 32. Insbesondere ist die Fluidumwälzeinheit 32 an einem Wärmepumpenvorlauf 34 der Wärmepumpe 16 angeschlossen. Insbesondere ist die Fluidumwälzeinheit 32 an einem Erzeugerrücklauf 36 des weiteren Erzeugers 26 angeschlossen. Vorzugsweise umfasst die Wärmevorrichtung 12 zumindest eine Verbraucherfördereinheit 38. Vorzugsweise ist die Verbraucherfördereinheit 38 an einem Erzeugervorlauf 40 des weiteren Erzeugers 26 angeschlossen. Vorzugsweise ist die Verbraucherfördereinheit 38 an einem Rücklaufanschluss 42 der Wärmevorrichtung 12 für den Verbraucher 28 angeschlossen. Vorzugsweise ist ein Vorlaufanschluss 46 der Wärmevorrichtung 12 für den Verbraucher 28 an einem Wärmepumpenrücklauf 48 der Wärmepumpe 16 angeschlossen.

Die Wärmevorrichtung 12 umfasst einen Wärmespeicher 18. Der Wärmespeicher 18 ist mit dem Wärmekreislauf 14 koppelbar ausgebildet. Vorzugsweise ist der Wärmespeicher 18 als Warmwasserspeicher ausgebildet. Insbesondere umfasst die Wärmevorrichtung 12 einen Wärmeübertrager 50 zu einem Austausch von Wärme zwischen dem Wärmekreislauf 14 und dem Wärmespeicher 18. Vorzugsweise umfasst die Wärmevorrichtung 12, insbesondere als Koppeleinheit, zumindest eine Speicherfördereinheit 22. Alternativ oder zusätzlich umfasst die Wärmevorrichtung 12, insbesondere als Koppeleinheit, ein Dreiwegeventil 47, welches insbesondere stromabwärts des weiteren Erzeugers 26 und stromaufwärts des Wärmespeicher 18 und des Verbrauchers 28 angeordnet ist. Vorzugsweise ist die Speicherfördereinheit 22 an einem Erzeugervorlauf 40 des weiteren Erzeugers 26 angeschlossen, insbesondere fluidtechnisch parallel zu der Verbraucherfördereinheit 38. Vorzugsweise ist die Speicherfördereinheit 22 an einem Speicherrücklauf 44 des Wärmespeichers 18 angeschlossen. Vorzugsweise ist ein Speichervorlauf 52 des Wärmespeichers 18 an dem Wärmepumpenrücklauf 48 der Wärmepumpe 16 angeschlossen, insbesondere fluidtechnisch parallel zu dem Vorlaufanschluss 46 für den Verbraucher 28.

Vorzugsweise umfasst die Wärmevorrichtung 12 eine Sensoreinheit. Vorzugsweise umfasst die Sensoreinheit zumindest einen Temperatursensor 54.Vorzugsweise ist der Temperatursensor 54 an dem Wärmepumpenvorlauf 34 der Wärmepumpe 16 angeordnet. Vorzugsweise umfasst die Sensoreinheit zumindest einen weiteren Temperatursensor 56. Vorzugsweise ist der weitere Temperatursensor 56 an dem Verbraucher 28 anordenbar. Vorzugsweise umfasst die Sensoreinheit zumindest einen zusätzlichen Temperatursensor 58. Vorzugsweise ist der zusätzliche Temperatursensor 58 an dem Wärmespeicher 18 angeordnet. Optional umfasst die Sensoreinheit zumindest einen Drucksensor, ein Durchflussratensensor oder andere, dem Fachmann als sinnvoll erscheinende Sensorelemente (hier nicht gezeigt). Die Wärmevorrichtung 12 umfasst eine Steuereinheit 30. Die Steuereinheit 30 ist zu einer Durchführung eines Verfahrens 10 ausgebildet, welches insbesondere in Figur 2 dargestellt ist.

Figur 2 zeigt das Verfahren 10. Das Verfahren 10 ist zur Steuerung der Wärmevorrichtung 12 vorgesehen. Der Wärmespeicher 18 wird abhängig von einer Temperaturänderung 20 des Wärmekreislaufs 14 in den Wärmekreislauf 14 ein- und/oder ausgekoppelt, um die Temperaturänderung 20 zu verlangsamen. Insbesondere überwacht die Steuereinheit 30 einen Temperaturverlauf des Wärmekreislaufs 14. Insbesondere fragt die Steuereinheit 30 Temperaturmesswerte von dem Temperatursensor 54 ab. Insbesondere vergleicht die Steuereinheit 30 einen aktuellen Temperaturmesswert mit einer maximalen und einer minimalen zulässigen Betriebstemperatur für die Wärmepumpe 16. Insbesondere vergleicht die Steuereinheit 30 zumindest zwei zeitlich beabstandete Temperaturmesswerte, um die Temperaturänderung 20 zu erfassen. Eine zusätzliche Wärmekapazität zumindest des weiteren Erzeugers 26 der Wärmevorrichtung 12 wird, vorzugsweise ununterbrochen, genutzt, um die Temperaturänderung 20 des Wärmekreislaufs 14 zu verlangsamen.

Vorzugsweise führt die Steuereinheit 30 einen Temperaturabgleich 24 durch, wenn die Temperaturänderung 20 betragsmäßig einen vorgegebenen Schwellenwert übersteigt. Der Temperaturabgleich 24 wird vor einem Einkoppeln des Wärmespeichers 18 durchgeführt. Insbesondere fragt die Steuereinheit 30 zu dem Temperaturabgleich 24 eine Speichertemperatur von dem zusätzlichen Temperatursensor 58 ab. Insbesondere vergleicht die Steuereinheit 30 die Speichertemperatur mit dem aktuellen Temperaturmesswert. Vorzugsweise überprüft die Steuereinheit 30, ob bei fallenden Temperaturmesswerten die Speichertemperatur größer ist als der aktuelle Temperaturmesswert. Beispielsweise können die Temperaturmesswerte fallen, weil die Wärmepumpe 16 eine Enteisung durchführt. Vorzugsweise überprüft die Steuereinheit 30, ob bei steigenden Temperaturmesswerten die Speichertemperatur kleiner ist als der aktuelle Temperaturmesswert. Beispielsweise können die Temperaturmesswerte steigen, weil ein Wärmebedarf des Verbrauchers 28 geringer wird. Vorzugsweise wird der Speicherkoppelschritt 60 ausgelöst, falls der Temperaturabgleich 24 ergibt, dass der Wärmespeicher 18, insbesondere bei fallenden Temperaturmesswerten, Wärme abgeben, oder, insbesondere bei steigenden Temperaturmesswerten, Wärme aufnehmen kann.

In dem Speicherkoppelschritt 60 wird zu einem Einkoppeln und/oder einem Auskoppeln des Wärmespeichers 18 die Speicherfördereinheit 22 der Wärmevorrichtung 12 angesteuert. Insbesondere stellt die Steuereinheit 30 die Speicherfördereinheit 22 auf eine Maximalförderleistung der Speicherfördereinheit 22. Während einer Enteisung der Wärmepumpe 16 wird eine Fördermenge des Wärmeträgers durch die Wärmepumpe 16, insbesondere die Förderleistung der Fluidumwälzeinheit 32, moduliert. Insbesondere wird die Fluidumwälzeinheit 32 auf zumindest 50 %, insbesondere zumindest 60%, vorzugsweise auf zumindest 70 %, einer Maximalförderleistung der Fluidumwälzeinheit 32 eingestellt. Insbesondere kann abhängig von einer Auslegung der Maximalleistung der Fluidumwälzeinheit 32 auch eine andere Förderleistung eingestellt werden, um die Temperaturänderung 20 zu verlangsamen. In dem Speicherkoppelschritt 60 werden der Wärmespeicher 18 und die zusätzliche Wärmekapazität der Wärmevorrichtung 12, insbesondere des weiteren Erzeugers 26, zur gleichen Zeit verwendet, um die Temperaturänderung 20 des Wärmekreislaufs 14 zu verlangsamen.

Der Wärmespeicher 18 und eine zusätzliche Wärmekapazität werden abwechselnd verwendet, um die Temperaturänderung 20 des Wärmekreislaufs 14 zu verlangsamen. Insbesondere koppelt die Steuereinheit 30 den Verbraucher 28 während des Speicherkoppelschritts 60 aus dem Wärmekreislauf 14 aus, insbesondere durch Außerbetriebnahme der Verbraucherfördereinheit 38. Insbesondere entkoppelt die Steuereinheit 30 den Wärmespeicher 18, wenn eine Differenz zwischen der Speichertemperatur und dem aktuellen Temperaturmesswert des Temperatursensors 54 kleiner als ein vorgegebener Toleranzwert wird. Vorzugsweise führt die Steuereinheit 30, insbesondere bei steigenden Temperaturmesswerten, einen weiteren Temperaturabgleich 62 durch. Insbesondere fragt die Steuereinheit 30 eine Verbrauchertemperatur von dem weiteren Temperatursensor 56 ab. Vorzugsweise vergleicht die Steuereinheit 30 die Verbrauchertemperatur mit dem aktuellen Temperaturmesswert und/oder einer Verbrauchersolltemperatur. Vorzugsweise nimmt die Steuereinheit 30 die Verbraucherfördereinheit 38 in einem Verbraucherkoppelschritt 64 in Betrieb, wenn Wärme an den Verbraucher 28 abgegeben werden kann. Eine zusätzliche Wärmekapazität zumindest des einen an der Wärmevorrichtung 12 angeschlossenen Verbrauchers 28 wird genutzt, um die Temperaturänderung 20 des Wärmekreislaufs 14 zu verlangsamen. Insbesondere ist in dem Verbraucherkoppelschritt 64 der Wärmespeicher 18 aus dem Wärmekreislauf 14 ausgekoppelt. Insbesondere entkoppelt die Steuereinheit 30 den Verbraucher 28, wenn eine Differenz zwischen der Verbrauchertemperatur, dem aktuellen Temperaturmesswert des Temperatursensors 54 und/oder einer Verbrauchersolltemperatur kleiner als ein vorgegebener Toleranzwert wird. Vorzugsweise beginnt die Steuereinheit 30 nach dem Verbraucherkoppelschritt 64 einen neuen Zyklus mit dem Temperaturabgleich 24.

Vorzugsweise führt die Steuereinheit 30 bei einem negativen Ergebnis des Temperaturabgleichs 24 und/oder des weiteren Temperaturabgleichs 62 eine Extremwertüberwachung 66 durch. In zumindest einem Verfahrensschritt während eines Heizmodus der Wärmepumpe 16 wird die Wärmepumpe 16 abgestellt, wenn die Speichertemperatur des Wärmespeichers 18 höher ist als der Temperaturmesswert des Wärmekreislaufs 14. Insbesondere schaltet die Steuereinheit 30 bei Erreichen der minimalen und/oder maximalen zulässigen Betriebstemperatur die Wärmepumpe 16 aus und/oder wechselt zu einem Taktbetrieb 68 für die Wärmepumpe 16.

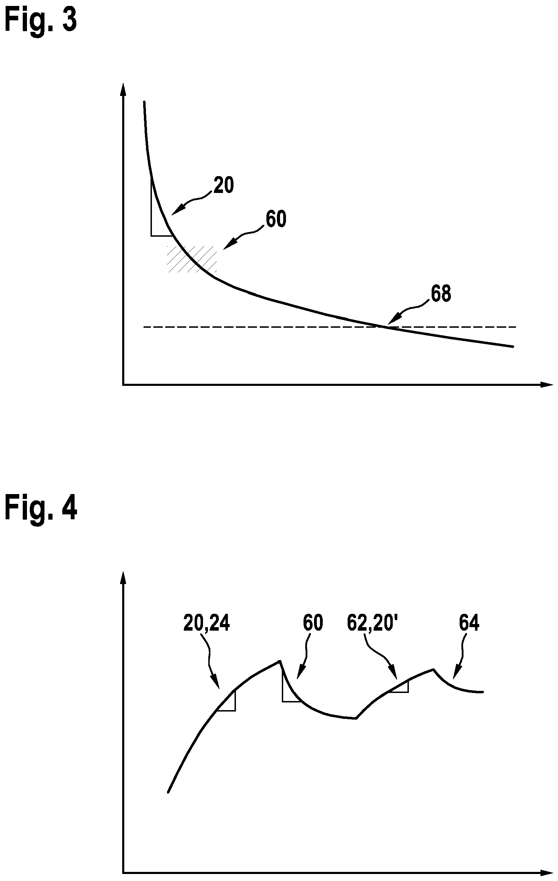

Figur 3 zeigt beispielhaft einen zeitlichen Temperaturverlauf des Wärmekreislaufs 14 während einer Enteisung der Wärmepumpe 16 im Rahmen des Verfahrens 10. Insbesondere wird nach einem Feststellen der Enteisung anhand der Temperaturänderung 20 der Speicherkoppelschritt 60 ausgeführt. Insbesondere verlangsamt sich anschließend an das Einkoppeln des Wärmespeichers 18 in den Wärmekreislauf 14 die Temperaturänderung 20. Wird die minimal zulässige Betriebstemperatur erreicht, nimmt die Steuereinheit 30 optional den zusätzlichen Erzeuger 26 in Betrieb, um insbesondere ein Einfrieren des Wärmekreislaufs 14 zu verhindern, und/oder bricht einen Enteisungsvorgang ab.

Figur 4 zeigt beispielshaft einen zeitlichen Temperaturverlauf des Wärmekreislaufs 14 während eines verringerten Wärmebedarfs des Verbrauchers 28 im Rahmen des Verfahrens 10. Insbesondere wird bei Feststellung von steigenden Temperaturmesswerten anhand der Temperaturänderung 20 der Speicherkoppelschritt 60 ausgeführt. Während des Speicherkoppelschritts 60 sinkt der Temperaturmesswert zunächst, da kälterer Wärmeträger aus dem Wärmespeicher 18 in der Wärmekreislauf 14 gelangt. Insbesondere kann sich der Verbraucher 28 während des Speicherkoppelschritts 60 aufgrund von Wärmeverlusten abkühlen. Kommt es nach einer Thermalisierungsphase des Wärmekreislaufs 14 erneut zu einer Temperaturänderung 20, wird insbesondere von dem Speicherkoppelschritt 60 zu dem Verbraucherkoppelschritt 64 gewechselt. Sind die Wärmeverluste am Verbraucher 28 ausgeglichen, wird vorzugsweise erneut ein Speicherkoppelschritt 60 ausgeführt. Insbesondere muss die Wärmepumpe 16 nur dann ausgeschaltet werden, wenn Verbraucher 28 und Wärmespeicher 18 gesättigt sind.

## Patentansprüche

1. Verfahren zur Steuerung einer Wärmevorrichtung, welche zumindest eine Koppeleinheit, zumindest einen Wärmekreislauf (14) mit zumindest einer Wärmepumpe (16) und einen Wärmespeicher (18), welcher mit dem Wärmekreislauf (14) koppelbar ist, umfasst, wobei der Wärmekreislauf (14) die Wärmepumpe (16) und zumindest einen Verbraucheranschluss für zumindest einen Wärmeübertrager umfasst, wobei der Wärmespeicher (18) in einem fluidtechnischen Speicherzweig der Wärmevorrichtung angeordnet ist und wobei der Wärmespeicher (18), insbesondere der Speicherzweig, fluidtechnisch parallel zu dem Verbraucheranschluss ein- und/oder auskoppelbar ist, **dadurch gekennzeichnet, dass** der Wärmespeicher (18) abhängig von einer Temperaturänderung (20) des Wärmekreislaufs (14) in den Wärmekreislauf (14) ein- und/oder ausgekoppelt wird, um die Temperaturänderung (20) zu verlangsamen, wobei die Koppeleinheit den Speicherzweig in zumindest einem Verfahrensschritt in den Wärmekreislauf einkoppelt und in zumindest einem Verfahrensschritt aus dem Wärmekreislauf auskoppelt.

2. Verfahren nach Anspruch 1, **dadurch gekennzeichnet, dass** in zumindest einem Verfahrensschritt zu einem Einkoppeln und/oder einem Auskoppeln des Wärmespeichers (18) eine Speicherfördereinheit (22) der Wärmevorrichtung angesteuert wird.

3. Verfahren nach Anspruch 1 oder 2, **dadurch gekennzeichnet, dass** in zumindest einem Verfahrensschritt vor einem Einkoppeln des Wärmespeichers (18) ein Temperaturabgleich (24) durchgeführt wird.

4. Verfahren nach einem der vorhergehenden Ansprüche, **dadurch gekennzeichnet, dass** in zumindest einem Verfahrensschritt eine zusätzliche Wärmekapazität zumindest eines weiteren Erzeugers (26), insbesondere eines Heizkessels, der Wärmevorrichtung genutzt wird, um die Temperaturänderung (20) des Wärmekreislaufs (14) zu verlangsamen.

5. Verfahren nach einem der vorhergehenden Ansprüche, **dadurch gekennzeichnet, dass** in zumindest einem Verfahrensschritt eine zusätzliche Wärmekapazität zumindest eines an der Wärmevorrichtung angeschlossenen Verbrauchers (28) genutzt wird, um die Temperaturänderung (20) des Wärmekreislaufs (14) zu verlangsamen.

6. Verfahren nach einem der vorhergehenden Ansprüche, **dadurch gekennzeichnet, dass** in zumindest einem Verfahrensschritt der Wärmespeicher (18) und eine zusätzliche Wärmekapazität abwechselnd verwendet werden, um die Temperaturänderung (20) des Wärmekreislaufs (14) zu verlangsamen.

7. Verfahren nach einem der vorhergehenden Ansprüche, **dadurch gekennzeichnet, dass** in zumindest einem Verfahrensschritt der Wärmespeicher (18) und eine zusätzliche Wärmekapazität der Wärmevorrichtung zur gleichen Zeit verwendet werden, um die Temperaturänderung (20) des Wärmekreislaufs (14) zu verlangsamen.

8. Verfahren nach einem der vorhergehenden Ansprüche, **dadurch gekennzeichnet, dass** in zumindest einem Verfahrensschritt während einer Enteisung der Wärmepumpe (16) eine Fördermenge eines Wärmeträgers durch die Wärmepumpe (16) moduliert wird.

9. Verfahren nach einem der vorhergehenden Ansprüche, **dadurch gekennzeichnet, dass** in zumindest einem Verfahrensschritt während eines Heizmodus der Wärmepumpe (16) die Wärmepumpe (16) abgestellt wird, wenn eine Temperatur des Wärmespeichers (18) höher ist als eine Temperatur des Wärmekreislaufs (14).

10. Wärmevorrichtung, insbesondere Heizungsanlage, mit zumindest einem Wärmekreislauf (14), der zumindest eine Wärmepumpe (16) und zumindest einen Verbraucheranschluss für zumindest einen Wärmeübertrager umfasst, mit einem Wärmespeicher (18), welcher mit dem Wärmekreislauf (14) koppelbar ist, mit zumindest einer Koppeleinheit um den Wärmespeicher (18) in den Wärmekreislauf (14) einzukoppeln und um den Wärmespeicher (18) aus dem Wärmekreislauf (14) auszukoppeln, mit einem fluidtechnischen Speicherzweig, in welchem der Wärmespeicher (18) angeordnet ist, wobei der Wärmespeicher (18), insbesondere der Speicherzweig, fluidtechnisch parallel zu dem Verbraucheranschluss ein- und/oder auskoppelbar ist und mit einer Steuereinheit (30), **dadurch gekennzeichnet, dass** die Steuereinheit (30) zur Durchführung eines Verfahrens nach einem der Ansprüche 1 bis 9, wobei die Steuereinheit (30) zu einer Steuerung der Koppeleinheit vorgesehen ist.

## Claims

1. Method for controlling a heating device comprising at least one coupling unit, at least one heating circuit (14), which has at least one heat pump (16), and a heat accumulator (18), which is able to be coupled to the heating circuit (14), wherein the heating circuit (14) comprises the heat pump (16) and at least one consumer connection for at least one heat exchanger, wherein the heat accumulator (18) is arranged in a fluidic accumulator branch of the heating device, and wherein the heat accumulator (18), in particular the accumulator branch, is able to be coupled in and/or out fluidically parallel to the consumer connection, **characterized in that** the heat accumulator (18) is, in a manner dependent on a change in temperature (20) of the heating circuit (14), coupled into and/or or out of the heating circuit (14) in order to slow down the change in temperature (20), wherein the coupling unit couples the accumulator branch into the heating circuit in at least one method step and couples it out of the heating circuit in at least one method step.

2. Method according to Claim 1, **characterized in that**, in at least one method step, an accumulator conveying unit (22) of the heating device is activated for coupling in and/or coupling out the heat accumulator (18).

3. Method according to Claim 1 or 2, **characterized in that**, in at least one method step, a temperature comparison (24) is carried out prior to a coupling in of the heat accumulator (18).

4. Method according to one of the preceding claims, **characterized in that**, in at least one method step, an additional heat capacity of at least one further generator (26), in particular of a heating boiler, of the heating device is used to slow down the change in temperature (20) of the heating circuit (14).

5. Method according to one of the preceding claims, **characterized in that**, in at least one method step, an additional heat capacity of at least one consumer (28) connected to the heating device is used to slow down the change in temperature (20) of the heating circuit (14).

6. Method according to one of the preceding claims, **characterized in that**, in at least one method step, the heat accumulator (18) and an additional heat capacity are used in an alternating manner to slow down the change in temperature (20) of the heating circuit (14).

7. Method according to one of the preceding claims, **characterized in that**, in at least one method step, the heat accumulator (18) and an additional heat capacity of the heating device are used at the same time to slow down the change in temperature (20) of the heating circuit (14) .

8. Method according to one of the preceding claims, **characterized in that**, in at least one method step, a conveyance flow rate of a heat carrier through the heat pump (16) is modulated during a de-icing of the heat pump (16) .

9. Method according to one of the preceding claims, **characterized in that**, in at least one method step, during a heating mode of the heat pump (16), the heat pump (16) is switched off if a temperature of the heat accumulator (18) is higher than a temperature of the heating circuit (14).

10. Heating device, in particular heating installation, having at least one heating circuit (14), which comprises at least one heat pump (16) and at least one consumer connection for at least one heat exchanger, having a heat accumulator (18), which is able to be coupled to the heating circuit (14), having at least one coupling unit for coupling the heat accumulator (18) into the heating circuit (14) and for coupling the heat accumulator (18) out of the heating circuit (14), having a fluidic accumulator branch in which the heat accumulator (18) is arranged, wherein the heat accumulator (18), in particular the accumulator branch, is able to be coupled in and/or out fluidically parallel to the consumer connection, and having a control unit (30), **characterized in that** the control unit (30) for carrying out a method according to one of Claims 1 to 9, wherein the control unit (30) is intended for controlling the coupling unit.

## Revendications

1. Procédé permettant de commander un dispositif de chauffage qui comprend au moins une unité de couplage, au moins un circuit thermique (14) pourvu d'au moins une pompe à chaleur (16) et d'un accumulateur de chaleur (18) qui peut être couplé au circuit thermique (14), dans lequel le circuit thermique (14) comprend la pompe à chaleur (16) est au moins un branchement de consommateur pour au moins un échangeur thermique, dans lequel l'accumulateur de chaleur (18) est disposé dans une branche d'accumulateur de communication fluidique du dispositif de chauffage, et dans lequel l'accumulateur de chaleur (18), en particulier la branche d'accumulateur, peut être couplée et/ou découplée en communication fluidique, en parallèle au branchement de consommateur, **caractérisé en ce que** l'accumulateur de chaleur (18) est couplé et/ou découplé dans le circuit thermique (14) en fonction d'une variation de température (20) du circuit thermique (14) afin de ralentir la variation de température (20), dans lequel, dans au moins une étape de procédé, l'unité de couplage couple la branche d'accumulateur dans le circuit thermique et la découple du circuit thermique dans au moins une étape de procédé.

2. Procédé selon la revendication 1, **caractérisé en ce que** dans au moins une étape de procédé, une unité de refoulement d'accumulateur (22) du dispositif de chauffage est pilotée pour le couplage et/ou le découplage de l'accumulateur de chaleur (18).

3. Procédé selon la revendication 1 ou 2, **caractérisé en ce que** dans au moins une étape de procédé, un équilibrage de température (24) est effectué avant le couplage de l'accumulateur de chaleur (18).

4. Procédé selon l'une quelconque des revendications précédentes, **caractérisé en ce que** dans au moins une étape de procédé, une capacité thermique additionnelle d'au moins un générateur (26) supplémentaire, en particulier d'une chaudière, du dispositif de chauffage est exploitée pour ralentir la variation de température (20) du circuit thermique (14).

5. Procédé selon l'une quelconque des revendications précédentes, **caractérisé en ce que** dans au moins une étape de procédé, une capacité thermique additionnelle d'au moins un consommateur (28) raccordé au dispositif de chauffage est exploitée pour ralentir la variation de température (20) du circuit thermique (14).

6. Procédé selon l'une quelconque des revendications précédentes, **caractérisé en ce que** dans au moins une étape de procédé, l'accumulateur de chaleur (18) et une capacité thermique additionnelle sont utilisés en alternance pour ralentir la variation de température (20) du circuit thermique (14).

7. Procédé selon l'une quelconque des revendications précédentes, **caractérisé en ce que** dans au moins une étape de procédé, l'accumulateur de chaleur (18) et une capacité thermique additionnelle du dispositif de chauffage sont utilisés en même temps pour ralentir la variation de température (20) du circuit thermique (14).

8. Procédé selon l'une quelconque des revendications précédentes, **caractérisé en ce que** dans au moins une étape de procédé, pendant un dégivrage de la pompe à chaleur (16), un débit d'un agent caloporteur est modulé par la pompe à chaleur (16).

9. Procédé selon l'une quelconque des revendications précédentes, **caractérisé en ce que** dans au moins une étape de procédé, pendant un mode chauffage de la pompe à chaleur (16), la pompe à chaleur (16) est arrêtée si une température de l'accumulateur de chaleur (18) est supérieure à une température du circuit thermique (14).

10. Dispositif de chauffage, en particulier système de chauffage, comprenant au moins un circuit thermique (14) qui comprend au moins une pompe à chaleur (16) et au moins un branchement de consommateur pour au moins un échangeur thermique, comprenant un accumulateur de chaleur (18) qui peut être couplé au circuit thermique (14), comprenant au moins une unité de couplage pour coupler l'accumulateur de chaleur (18) dans le circuit thermique (14) et pour découpler l'accumulateur de chaleur (18) du circuit thermique (14), comprenant une branche d'accumulateur de communication fluidique dans laquelle est disposée l'accumulateur de chaleur (18), dans lequel l'accumulateur de chaleur (18), en particulier la branche d'accumulateur, peut être couplée et/ou découplée en communication fluidique, en parallèle au branchement de consommateur, et comprenant une unité de commande (30), **caractérisé en ce que** l'unité de commande (30) pour exécuter un procédé selon l'une quelconque des revendications 1 à 9, l'unité de commande (30) étant prévue pour commander l'unité de couplage.
